# EUROPEAN PATENT APPLICATION

(11) **EP 0 791 525 A1**
(43) Date of publication of application: **27.08.1997**
(21) Application number: 97102694.3
(22) Date of filing: 19.02.1997
(51) Int. Cl.: B62D 25/18

(54) **Mudguard with spray suppression device**

(30) Priority: 22.02.1996 GB 9603715
(71) Applicant: Team Spatz Limited, Great Barr, Birmingham B44 9ES (GB)
(72) Inventor: Strong, Nicholas Maxwell, Birmingham B45 8HE (GB)
(74) Representative: Dodd, Graham Marshall

(57) **Abstract**

A spray-suppression device, e.g. a mudguard, rain flap, or valance, for a vehicle has an operative surface comprising a plurality of spray-suppression formations (20) in the form of protuberances or depressions of polyhedron configuration.

## Description

### Description of Invention

This invention relates to a spray-suppression device intended to reduce the projection of spray from tyres of moving vehicles. It is known to provide a spray-suppression device having an operative surface comprising a plurality of upstanding blade elements which simulate blades of grass. Another known spray-suppression device has an operative surface which comprises a generally planar surface having a plurality of upstanding spikes made of suitable synthetic plastics material.

Such known spray-suppression devices suffer from the disadvantage that the interstices between the blades or spikes become clogged with mud or other road detritus.

An object of the invention is to provide a spray-suppression device whereby the above-mentioned problem is overcome or is reduced.

According to one aspect of the invention we provide a spray-suppression device having an operative surface comprising a plurality of spray-suppression formations of polyhedron configuration.

In one aspect of the invention the spray-suppression formations comprise protuberances, whilst in another aspect of the invention the spray-suppression formations comprise depressions, relative to a reference surface.

The spray-suppression formations may have a base lying in said reference surface and the ratio of the maximum dimension of the base to the height or depth of the formation may lie in the range 1:0.25 to 1:3 and preferably lying in the range 1:0.4 to 1:2 and still more preferably 1:0.5 to 1:1.5.

The spray-suppression formations may be at least partially pyramidal comprising a polygonal base, e.g. of square configuration and four triangular sides converging towards a vertex.

Alternatively, the spray-suppression formations may be of hexahedron configuration having an hexagonal base and six triangular sides converging towards a vertex.

Preferably the formations which are spaced from edge parts of the device are disposed so that adjacent sides of adjacent polygonal bases coincide or are closely adjacent.

By closely adjacent we mean that the adjacent sides are not spaced by more than 5mm.

The spray-suppression formations may be of the same size and shape as one another throughout the operative surface.

Alternatively, the spray-suppression formations may vary in shape.

The spray suppression formations in one region of the operative surface may be of the same shape and size as each other but different from the formations in another region of the surface.

The formations in at least one region of the surface may be a combination of shapes and/or sizes.

The operative surface of the device may be made in synthetic plastics material such as high-density polyethylene.

The device may be made by vacuum forming.

According to another aspect of the invention we provide a spray-suppression system intended to reduce the distribution of pulverised water thrown up by the tyres of a vehicle in motion and comprising at least one of a mudguard, rain flap and valance equipped with a spray-suppression device according to the first aspect of the invention.

The mudguard may be a rigid or semi-rigid component intended to trap water thrown up by the tyres in motion and to direct it towards the ground. The mudguard may entirely or partially form an integral part of a vehicle bodywork such as the lower part of a load platform or the like.

The rain flap may be a flexible component mounted generally upright behind a wheel of the vehicle, on the lower part of the chassis or the load platform or on the mudguard.

The valance may comprise a component located approximately in a vertical plane that is parallel to the longitudinal plane of the vehicle. It may form part of a mudguard or of the vehicle bodywork.

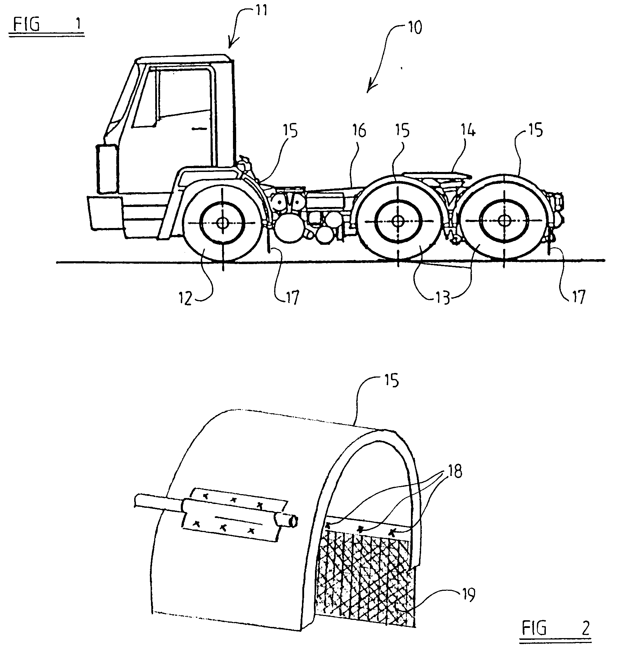

Embodiments of the invention will now be described with reference to the accompanying drawings by way of example, wherein
FIGURE 1 is a side elevation of a heavy goods vehicle tractor fitted with a spray-suppression device embodying the invention,
FIGURE 2 is a fragmentary perspective view to an enlarged scale, showing a rear mudguard of the vehicle of Figure 1,
FIGURE 3 is a fragmented perspective view of one embodiment of spray-suppression device embodying the invention,
FIGURE 4 is a perspective view of another embodiment of spray-suppression device embodying the invention, and
FIGURE 5 is a fragmentary perspective view of a further spray-suppression device embodying the invention.

Referring to the drawings, a conventional heavy goods vehicle tractor is indicated generally at 10 and comprises a cab 11 equipped with the usual driver's seat and controls, etc, and beneath which is housed a conventional engine and transmission. Mounted on a chassis 16 is a pair of front wheels 12 and two pairs of rear wheels 13, at least one pair being driven by the transmission from the engine.

The tractor 10 is also provided with a conventional "fifth" wheel connection 14 whereby a trailer can be connected to the tractor vehicle 10.

The front wheel 12 is provided with a mudguard, part of which is formed integrally with the cab 11, and the remainder of which is formed separate and mounted on the chassis 16. The rear wheels 13 are provided with separate mudguards 15 of conventional configuration and construction.

The mudguards 15 of the rearmost wheels 13 at their trailing lower end portions are provided with rain flaps 17 which comprise a generally flexible component mounted behind the wheel so as to extend in a generally upright position, although the rain flaps may be inclined to the vertical to a limited extent.

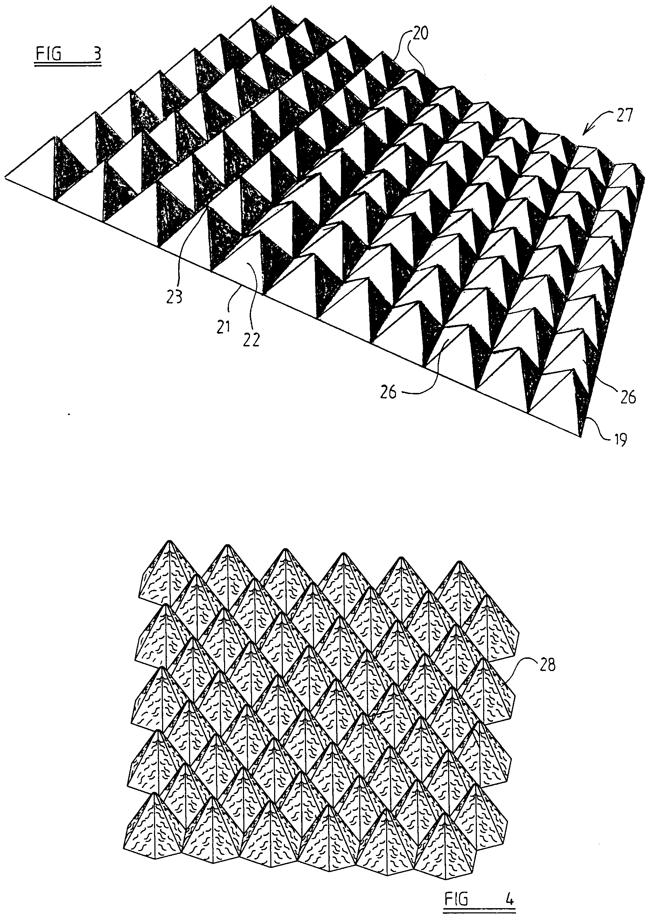

The rain flap 17 may be attached to the mudguard 15 in any suitable manner but in the present example they are attached by nuts and bolts as indicated at 18 in Figure 2.

The rain flaps are equipped with a spray suppression device 19 to be described hereinafter in more detail. If desired, other components of the vehicle may be equipped with a spray suppression device such as the mudguard itself and/or valances, ie a component located generally within the vertical plane which is parallel to the longitudinal plane of the vehicle; it may form part of a mudguard or of a vehicle bodywork.

Referring now to Figure 3, a spray suppression device 19 is illustrated. The spray suppression device is made by taking a flat sheet of suitable synthetic plastics material, in the present example high-density polyethylene, and forming it, in the present example, by vacuum forming to the configuration illustrated in Figure 3. The configuration as illustrated in Figure 3 comprises a plurality of protuberances 20 all of the same size and shape. Each protuberance is a pyramid configuration comprising a polygonal base 21 of square shape and four triangular sides 22 converging towards a vertex 23. Each side of the base 21 of the protuberances which are spaced from the periphery of the device, coincide with a side of an adjacent base. The diagonal dimension of the base of each protuberance is 29mm and the vertical height of the protuberance from the plane of the base to the vertex is 15mm and hence lie in the ratio 1:0.51 but may, for example, have a ratio lying in the range 1:0.25 to 1:3 and preferably lying in the range 1:0.4 to 1:2 and still more preferably 1:0.5 to 1:1.5.

Although it is preferred that the sides of adjacent protuberances coincide, if desired they may be spaced from each other by a small distance up to 5mm.

If desired, the protuberances may be of other polyhedron configuration. For example, they may have a triangular base or, and preferably, they have a hexagonal base so that in plan view the spray suppression device 19 has the configuration shown in Figure 4 having close packed hexahedron protuberances 28.

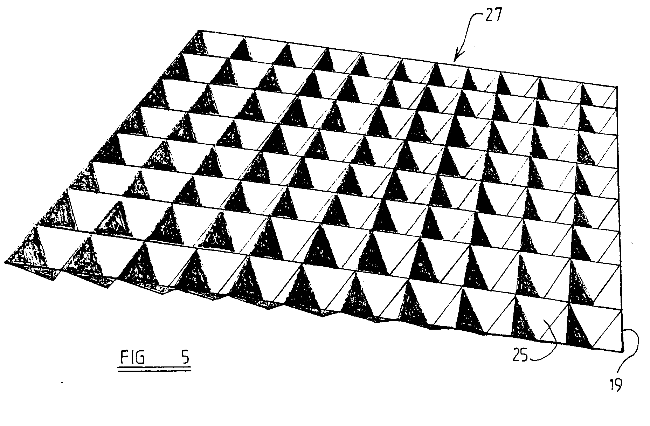

Further alternatively, the spray suppression device may have spray suppression formations in the form of depressions 25 as shown in Figure 5. The depressions 25 in Figure 5 are of inverted pyramid configuration but, if desired, they may be of other polyhedral configuration, for example, having a triangular base or a hexagonal base. Again, the sides of adjacent depressions spaced from the edges of the device may coincide with edges of adjacent depressions or may be spaced therefrom by a small amount, for example, up to 5mm.

In the present example, the spray suppression device illustrated in Figure 3 is oriented so that the "valleys" 26 between adjacent protuberances lie in horizontal and vertical planes but, if desired, the valleys 26 may be inclined to the horizontal and vertical, for example at 45°.

Although it is preferred that the device is made by the above-mentioned technique of vacuum forming so as to provide a device of substantially constant thickness, if desired the device may be made in any other desired manner to provide an operative surface 27 of one of the configurations described hereinbefore. It will be appreciated that by "operative surface" we mean the surface upon which pulverised or water spray projected by the tyres of a vehicle moving along a wet surface impinges in use.

A spray suppression device having an operative surface of the configuration described hereinbefore may be provided as a separate element mounted on a rain flap, mudguard, valance or the like, or the vehicle component such as the rain flap, mudguard, valance or the like may itself be formed so that the spray suppression device is an integral part thereof.

The spray suppression device illustrated in Figure 4 is similar to and made in the same way as previously described but has hexagons having a diagonal dimension, ie a dimension in the plane of the base between opposed corners which is 19mm long and a height, ie the distance between the plane of the base and the vertex 23, which is 22mm and hence lie in the ratio of 1:1.15. If desired however they may have a ratio lying in the range 1:0.25 to 1:3 and preferably lying in the range 1:0.4 to 1:2 and still more preferably 1:0.5 to 1:1.5. The surface of the sheet which is to provide the operative surface of the spray suppression device is formed with a textured configuration comprising a plurality of small grooves. Each groove may, for example, be up to 1mm or so wide and about 0.5mm deep, although they may be deeper or shallower. In the illustrated example the pattern is generally irregular comprising wavy lines, although the irregular pattern may be repeated over the area of the spray suppression device. Alternatively, the pattern may be regular. The pattern helps to absorb the energy of the spray. If desired, a similar textured configuration may be provided in spray suppression devices of other configuration including, for example, that illustrated in Figure 3. Further alternatively, the spray suppression device of Figure 4 may have an untextured or plain surface configuration.

A spray suppression device of this configuration and having an overall width of 500mm and overall length of 750mm was subjected to an energy absorption spray suppression device test similar to that described in Council Directive 91/226/EEC of 27th March 1991 and was found to conform to the test.

The dimensions and configurations of the spray suppression formations described hereinbefore may be adjusted empirically as necessary so as to comply with the above referred to directive or, indeed, with any other desired performance requirement. In particular, the formations may be the same size and shape as one another over the entire or substantially the entire surface of the device, or may differ from one another in different regions of the surface or within at least one region of the surface.

The features disclosed in the foregoing description, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A spray-suppression device (19) for a vehicle, having an operative surface comprising a plurality of spray-suppression formations (20, 25, 28) of polyhedron configuration.

2. A spray-suppression device according to Claim 1 wherein said spray-suppression formations comprise protuberances (20, 28) relative to a reference surface.

3. A spray-suppression device according to Claim 1 wherein said spray-suppression formations comprise depressions (25) relative to a reference surface.

4. A spray-suppression device according to Claim 2 or Claim 3 wherein said spray-suppression formations each have a base lying in said reference surface and the ratio of the maximum dimension of the base to the height or depth of the formation lies in the range 1:0.25 to 1:3.

5. A spray-suppression device according to Claim 4 wherein said ratio lies in the range 1:0.4 to 1:2.

6. A spray-suppression device according to Claim 5 wherein said ratio lies in the range 1:0.5 to 1:1.5.

7. A spray-suppression device according to any one of the preceding claims wherein said formations are at least partially pyramidal comprising a polygonal base and sides converging as they extend from the base.

8. A spray-suppression device according to Claim 7 wherein said base is square or hexagonal and there are four or six respectively substantially triangular sides converging towards a vertex.

9. A spray-suppression device according to Claim 7 or Claim 8 wherein said formations spaced from edge parts of the device are disposed so that adjacent sides of adjacent polygonal bases coincide or are closely adjacent to one another.

10. A spray-suppression device according to any one of the preceding claims wherein said formations are the same shape and size as one another over said surface, or differ from one another in different regions of the surface or within at least one region of the surface.

11. A spray-suppression device according to any one of the preceding claims wherein said operative surface is made of a plastics material.

12. A spray-suppression system comprising at least one of a mudguard, rain flap and valance equipped with a spray-suppression device according to any one of the preceding claims.
